# EUROPEAN PATENT APPLICATION

(11) **EP 4 586 617 A1**
(43) Date of publication of application: **16.07.2025**
(21) Application number: 22958219.2
(22) Date of filing: 08.09.2022
(51) Int. Cl.: H04N 21/422, H04N 21/81, H04N 21/475, G06F 3/01

(54) **TV AND TV CONTROL METHOD**

(71) Applicant: LG Electronics Inc., Yeongdeungpo-gu Seoul 07336 (KR)
(72) Inventor: BAEK, Sanghyun, Seoul 06772 (KR)
(74) Representative: Schornack, Oliver
(86) International application number: PCT/KR2022/013547
(87) International publication number: WO 2024/053764

(57) **Abstract**

One embodiment of the present disclosure provides a TV comprising: a display module for outputting content; a communication unit for receiving a control signal of a remote control device; and a control unit. The control unit carries out Bluetooth connection with an input device, and if a first control signal for changing the name of the input device is received from the remote control device, changes the name of the input device.

## Description

### [Technical Field]

The present disclosure relates to a TV and a method for controlling a TV.

### [Background]

Recently, as time spent at home has increased, consumption of activities such as remote work, OTT streaming, and cloud gaming has increased explosively, and TV functions that meet such demand are being highlighted. In this regard, rather than a TV itself providing all of these functions, a user installs frequently used external applications on the TV, and the TV provides an input device connection function to control the applications.

In particular, the TV is changing in a direction of ensuring connectivity to various input devices and providing a wire-free environment in terms of controlling the various applications.

Recently released TV models are creating a foundation for using a web browser, a cloud game, and the like on the TV in response to a wireless input device connection function.

However, although the input devices have users and usage purposes, the current TV does not reflect this and only provides the simple connection function.

In other words, to use the external application on the TV, each user should go through individual account authentication. In this regard, because an authentication process is different for each application type, it causes inconvenience to the user, but the user has no choice but to accept this because of a security issue.

Accordingly, the present disclosure seeks to overcome the inconveniences currently experienced by the users via user authentication within the TV of the corresponding input device and identification of an intent of using the input device in addition to a simple connection function of the input device.

### [Summary]

### [Technical Problem]

The present disclosure is to provide a TV and a method for controlling a TV that solve the above problem.

### [Technical Solutions]

According to an embodiment of the present disclosure, provided is a TV including a display module that outputs content, a communicator that receives a control signal of a remote control device, and a controller, wherein the controller establishes a Bluetooth connection with an input device, and changes a name of the input device when receiving a first control signal for changing the name of the input device from the remote control device.

The controller may map account information to the input device when the account information is input using the input device on a first application, and input the account information mapped to the input device automatically when the first application is used again.

The controller may encrypt and store the account information, and decrypt the encrypted account information when the account information is input.

The controller may discard the encrypted account information and newly encrypt the account information based on a first cycle.

The controller may output a frequently used application list when receiving a second control signal for setting a category of the input device, wherein the frequently used application list includes icons respectively corresponding to applications used at least a first number of times while the input device is connected.

The controller may map a second application to the input device when receiving a third control signal for selecting an icon corresponding to the second application included in the frequently used application list.

The controller may immediately execute the second application when the input device is connected.

The controller may output the application list when the input device is connected.

The controller may save an execution state of a third application when the input device is disconnected while executing the third application via the input device, and re-execute the third application based on the saved execution state of the third application when the input device is reconnected.

The controller may output a pop-up window indicating that the third application is re-executable when the input device is disconnected.

The controller may receive a first gesture signal from the remote control device, and map personalized information to the first gesture signal, wherein the personalized information includes at least one of a changed name of the input device, account information mapped to the input device, and a frequently used application list of the input device.

The controller may use the personalized information mapped to the first gesture signal when receiving the first gesture signal from the remote control device while the Bluetooth connection with the input device is lost.

According to another embodiment of the present disclosure, provided is a method for controlling a TV that receives a control signal from a remote control device including establishing a Bluetooth connection with an input device, changing a name of the input device when receiving a first control signal for changing the name of the input device from the remote control device, mapping account information to the input device when the account information is input using the input device on a first application, and inputting the account information mapped to the input device automatically when the first application is used again.

### [Advantageous Effects]

According to an embodiment of the present disclosure, convenience of user's application use within a TV is increased.

In addition, according to an embodiment of the present disclosure, an efficiency of managing the input device is increased because input device owner information is used.

Effects that may be obtained from the present disclosure are not limited to the effects mentioned above, and other effects not mentioned are able to be clearly understood by those skilled in the art in the technical field to which the present disclosure belongs from a description below.

### [Brief Description of the Drawings]

FIG. 1 is a block diagram illustrating constituent elements of a TV according to an embodiment of the present disclosure.
FIG. 2 is a view illustrating an embodiment in which different users using different input devices use a TV.
FIG. 3 is a view illustrating an embodiment of connecting a Bluetooth input device to a TV according to an embodiment of the present disclosure.
FIG. 4 is a view illustrating an embodiment of authenticating an account based on a Bluetooth input device on a TV according to an embodiment of the present disclosure.
FIG. 5 is a view illustrating an embodiment of deleting a connected account based on a Bluetooth input device on a TV according to an embodiment of the present disclosure.
FIG. 6 is a view illustrating an embodiment of setting a category of a Bluetooth input device on a TV according to an embodiment of the present disclosure.
FIG. 7 is a view illustrating an embodiment of outputting a list of applications linked to a Bluetooth input device on a TV according to an embodiment of the present disclosure.
FIG. 8 is a view illustrating an embodiment of storing a state of an application linked to a Bluetooth input device on a TV according to an embodiment of the present disclosure.
FIG. 9 is a view illustrating an embodiment of setting personalized information of a remote control device on a TV according to an embodiment of the present disclosure.
FIG. 10 is a view illustrating an embodiment of connecting a Bluetooth input device using personalized information on a TV according to an embodiment of the present disclosure.
FIG. 11 is a flowchart illustrating a method for controlling a TV according to an embodiment of the present disclosure.

### [Best Mode]

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be directly connected with the other element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

On the other hand, the TV described herein is, for example, an intelligent image display device implemented by adding a computer support function to a broadcast reception function, and further includes an Internet function or the like while sufficiently performing the broadcast reception function, so that the image display device may have user-friendly interfaces such as a handwriting input device, a touchscreen, or a spatial remote controller. Further, the image display device can support a wired or wireless Internet function by connecting to the Internet and a computer device, thereby performing e-mailing, web browsing, banking, or gaming. To implement these functions, the image display device may operate based on a standard general-purpose Operating System (OS).

Accordingly, the TV according to the present disclosure is designed in a manner that various applications can be easily added to or deleted from a general-purpose OS kernel so that the image display device can perform various user-friendly functions. The image display device may be, for example, a network TV, a Hybrid broadcast broadband TV (HBBTV), a smart TV, etc. The image display device is applicable to a smartphone as needed.

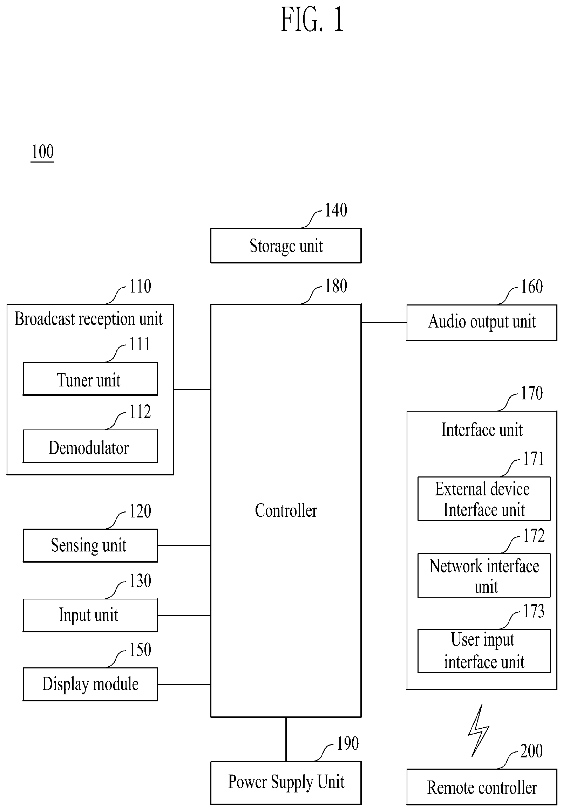

FIG. 1 is a block diagram illustrating constituent elements of a TV 100 according to an embodiment of the present disclosure.

Referring to FIG. 1, the TV 100 may include a broadcast reception unit 110, an external device interface unit 171, a network interface unit 172, a storage unit 140, a user input interface unit 173, an input unit 130, a controller 180, a display 150, an audio output unit 160, and/or a power-supply unit 190.

The broadcast reception unit 110 may include a tuner unit 111 and a demodulator 112.

Although not shown in the drawings, the TV 100 may include only the external device interface unit 171 and the network interface unit 172 from among the broadcast reception unit 110, the external device interface unit 171, and the network interface unit 172. That is, the TV 100 may not include the broadcast reception unit 110.

The tuner unit 111 may select a broadcast signal corresponding to either a user-selected channel or all prestored channels from among broadcast signals received through an antenna (not shown) or a cable (not shown). The tuner unit 111 may convert the selected broadcast signal into an intermediate frequency (IF) signal or a baseband image or a voice signal.

For example, when the selected broadcast signal is a digital broadcast signal, the tuner unit 111 may convert the selected broadcast signal into a digital IF (DIF) signal. When the selected broadcast signal is an analog broadcast signal, the tuner unit 111 may convert the selected broadcast signal into an analog baseband image or a voice signal (CVBS/SIF). That is, the tuner unit 111 may process the digital broadcast signal or the analog broadcast signal. The analog baseband image or the voice signal (CVBS/SIF) output from the tuner unit 111 may be directly input to the controller 180.

The tuner unit 111 may sequentially select broadcasting signals of all broadcasting channels stored through a channel memory function from among the received broadcast signals, and may convert the selected broadcast signal into an intermediate frequency (IF) signal or a baseband image or a voice signal.

The tuner unit 111 may include a plurality of tuners to receive broadcast signals of the plurality of channels. Alternatively, a single tuner for simultaneously receiving broadcast signals of the plurality of channels is also possible.

The demodulator 112 may receive the digital IF signal (DIF) converted by the tuner unit 111, and may thus perform demodulation of the received signal. The demodulator 112 may perform demodulation and channel decoding, and may output a stream signal (TS). The stream signal may be a signal formed by multiplexing an image signal, a voice signal, or a data signal.

The stream signal (TS) output from the demodulator 112 may be input tio the controller 180. The controller 180 may perform demultiplexing, image/audio signal processing, etc., may output an image through the display 150, and may output a voice through the audio output unit 160.

The sensing unit 120 may sense a change in the TV 100 or may sense an external change. For example, the sensing unit 120 may include a proximity sensor, an illumination sensor, a touch sensor, an infrared (IR) sensor, an ultrasonic sensor, an optical sensor (e.g., a camera), a voice sensor (e.g., a microphone), a battery gauge, environmental sensors (e.g., hygrometer, a thermometer, etc.).

The controller 180 may check a state of the TV 100 based on information collected by the sensing unit 120, may notify the user of a problem, or may control the TV 100 to be kept in the best state.

In addition, it is possible to provide an optimal viewing environment by differently controlling the content, image quality, size, etc. of the image provided to the display module 180 depending on the viewer, ambient illuminance, etc. sensed by the sensing unit. As the smart TV has evolved, the number of functions mounted in the display device increases, and the number of the sensing units 20 also increases together with the increasing functions.

The input unit 130 may be provided at one side of a main body of the TV 100. For example, the input unit 130 may include a touch pad, a physical button, and the like. The input unit 130 may receive various user commands related to the operation of the TV 100, and may transmit a control signal corresponding to the input command to the controller 180.

Recently, as a bezel of the TV 100 decreases in size, the number of display devices 100 each including a minimum number of input unit 130 formed in a physical button exposed to the outside is rapidly increasing. Instead, a minimum number of physical buttons may be provided on the back or side surface of the TV 100. The display device may receive a user input through the remote controller 200 through a touchpad or a user input interface unit 173 to be described later.

The storage unit 140 may store a program for processing and controlling each signal used in the controller 180, and may store a signal-processed image, a voice, or a data signal. For example, the storage unit 140 may store application programs designed for the purpose of performing various tasks that can be processed by the controller 180, and may selectively provide some of the stored application programs upon request of the controller 180.

The program stored in the storage unit 140 is not specifically limited to being executed by the controller 180. The storage unit 140 may perform a function for temporarily storing an image, a voice, or a data signal received from an external device through the external device interface unit 171. The storage unit 140 may store information about a predetermined broadcast channel through a channel memory function such as a channel map.

Although the storage unit 140 of FIG. 1 is provided separately from the controller 180, the scope of the present disclosure is not limited thereto, and the storage unit 140 may also be included in the controller 180 as needed.

The storage unit 140 may include at least one of a volatile memory (e.g., DRAM, SRAM, SDRAM, etc.) and a non-volatile memory (e.g., flash memory, hard disk drive (HDD), solid state drive (SSD), etc.).

The display 150 may generate a drive signal by converting an image signal, a data signal, an OSD signal, a control signal processed by the controller 180, or by converting an image signal, a data signal, a control signal, etc. received from the interface unit 171. The display 150 may include a display panel 181 having a plurality of pixels.

A plurality of pixels included in the display panel may include RGB sub-pixels. Alternatively, a plurality of pixels included in the display panel may include sub-pixels of RGBW. The display 150 may convert the image signal, the data signal, the OSD signal, the control signal, etc. processed by the controller 180 to generate a drive signal for the plurality of pixels.

The display 150 may be implemented as a plasma display panel (PDP), a liquid crystal display (LCD), an organic light emitting diode (OLED), a flexible display, etc. In addition, the display 150 may also be implemented as a three-dimensional (3D) display. The three-dimensional (3D) display 150 may be classified into a glassless-type 3D display and a glasses-type 3D display.

The display device may include a display module that occupies most parts of the front surface, and a case that covers the back and side surfaces of the display module and packages the display module.

Recently, the TV 100 has evolved from a flat-screen display to a curved-screen display. In order to implement the curved screen, the TV 100 may use a display module 150 that can be bent or curved, such as a light emitting diode (LED) or an organic light emitting diode (OLED), etc.

Conventionally, the LCD has difficulty in self-emitting light, so that the conventional LCD has been designed to receive light through a backlight unit. The backlight unit is a device for uniformly supplying light received from a light source to a liquid crystal located on the front surface of the display device. As the backlight becomes thinner, a thin LCD can be implemented. However, it is actually difficult for the backlight unit to be implemented as a curved structure formed of a flexible material. Although the backlight unit is implemented as a curved shape, it is difficult for light to be uniformly applied to the liquid crystal, thereby changing brightness of the screen.

On the other hand, the LED or the OLED is designed in a manner that each of constituent elements constructing the pixels can self-emit light without using the backlight unit, so that the LED or the OLED can be implemented as a curved shape without any problems. In addition, since each element can perform self-emission of light, brightness of each element is not affected by a change in the positional relationship between the element and adjacent elements, so that a curved display module 150 can be implemented as an LED or OLED.

OLED (Organic Light Emitting Diode) panels appeared in earnest in mid-2010 and are rapidly replacing LCDs in the small- and medium-sized display market. The OLED is a display made using the self-emission characteristics in which OLED emits light when a current flows in a fluorescent organic compound. Since the response speed of the OLED is faster than that of the LCD, there is little afterimage when moving images are implemented.

OLEDs may be used as a light-emitting display product. In this case, the light-emitting display device may use three fluorescent organic compounds (such as red, green, and blue) each having a self-emitting function, and may use the self-emitting phenomenon in which positive(+)-charged particles and electrons injected from a cathode and anode are combined with each other within the organic material, so that a backlight unit causing degradation of color sense need not be used.

The LED panel is implemented by technology for using only one LED element as one pixel, and has a smaller LED element compared to the prior art, so that a curved display module 150 can be implemented. Whereas the conventional device referred to as an LED TV can use the LED as a light source of the backlight unit for supplying light to the LCD, it is impossible for the LED of the conventional device to constitute a screen.

The display module may include a display panel, a coupling magnet located on the rear surface of the display panel, a first power-supply unit, and a first signal module. The display panel may include a plurality of pixels (R, G, B). The plurality of pixels (R, G, B) may be formed in each region where a plurality of data lines and a plurality of gate lines cross each other. The plurality of pixels (R, G, B) may be arranged in a matrix.

For example, the plurality of pixels (R, G, B) may include a red(R) sub-pixel, a green(G) sub-pixel, and a blue(B) sub-pixel. The plurality of pixels (R, G, B) may further include white (W) sub-pixel(s).

In the display module 150, one side where an image is displayed may be referred to as a front side or a front surface. When the display module 150 displays an image, one side where no image is observed may be referred to as a rear side or a rear surface.

Meanwhile, the display 150 may be implemented as a touchscreen, so that the display 150 can also be used as an input device in addition to an output device.

The audio output unit 160 may receive a voice-processed signal from the controller 180, and may output the received signal as a voice signal.

The interface unit 170 may serve as a path of connection to various kinds of external devices connected to the TV 100. The interface unit may include not only a wired method for transmitting/receiving data through a cable, but also a wireless method using the antenna.

The interface unit 170 may include at least one of a wired/wireless headset port, an external charger port, a wired/wireless data port, a memory card port, a port connected to a device having an identification module, an audio input/output (I/O) port, a video I/O port, and an earphone port.

As an example of a wireless method, the above-described broadcast reception unit 110 may be used. The broadcast reception unit 110 may be configured to use a broadcast signal, a mobile communication short-range communication signal, a wireless Internet signal, and the like.

The external device interface unit 171 may transmit or receive data to and from a connected external device. To this end, the external device interface unit 171 may include an A/V input/output (I/O) unit (not shown).

The external device interface unit 171 may be wired or wirelessly connected to an external device such as a digital versatile disc (DVD) player, a Blu-ray player, a game console, a camera, a camcorder, a computer (laptop), a set-top box, or the like, and may perform an input/output (I/O) operation with the external device.

In addition, the external device interface unit 171 may establish a communication network with various remote controllers 200, may receive a control signal related to operation of the TV 100 from the remote controller 200, or may transmit data related to operation of the TV 100 to the remote controller 200.

The external device interface unit 171 may include a wireless communication unit (not shown) for short-range wireless communication with other electronic devices. Through the wireless communication unit (not shown), the external device interface unit 171 may exchange data with an adjacent mobile terminal. In particular, the external device interface unit 171 may receive device information, application information, an application image, and the like from the mobile terminal in a mirroring mode.

The network interface unit 172 may provide an interface for connecting the TV 100 to a wired/wireless network including the Internet network. For example, the network interface unit 172 may receive content or data provided by the Internet, a content provider, or a network administrator through a network. The network interface unit 172 may include a communication module (not shown) for connection with the wired/wireless network.

The external device interface unit 171 and/or the network interface unit 172 may include a communication module for short-range communication such as Wi-Fi, Bluetooth, Bluetooth low energy (BLE), ZigBee, Near Field Communication (NFC), and a communication module for cellular communication such as Long-Term Evolution (LTE), LTE-A (LTE Advanced), Code Division Multiple Access (CDMA), WCDMA(wideband CDMA), UMTS(universal mobile telecommunications system), WiBro(Wireless Broadband), etc.

The user input interface unit 173 may transmit user input signals to the controller 180, or may transmit signals received from the controller 180 to the user. For example, the user input interface unit 173 may transmit or receive user input signals (such as a power-on/off signal, a channel selection signal, and a screen setting signal) to and from the remote controller 200, may transmit user input signals received through a local key (not shown) such as a power key, a channel key, a volume key, and a setting key to the controller 180, may transmit a user input signal received by a sensor unit (not shown) for sensing a user gesture to the controller 180, or may transmit a signal received from the controller 180 to the sensor unit.

The controller 180 may include at least one processor, and may control the overall operation of the TV 100 using the processor included therein. Here, the processor may be a general processor such as a CPU. Of course, the processor may be a dedicated device such as an ASIC, or other hardware-based processor.

The controller 180 may demultiplex the stream received through the tuner unit 111, the demodulator 112, the external device interface unit 171, or the network interface 172, and may process the demultiplexed signals to generate and output a signal for image or voice output.

The image signal processed by the controller 180 may be input to the display 150 and displayed as an image corresponding to the corresponding image signal. In addition, the image signal processed by the controller 180 may be input to the external output device through the external device interface unit 171.

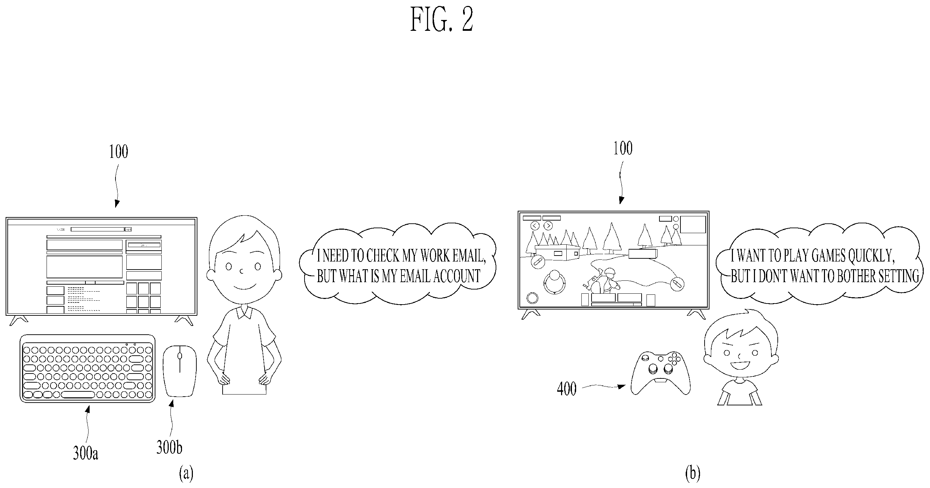

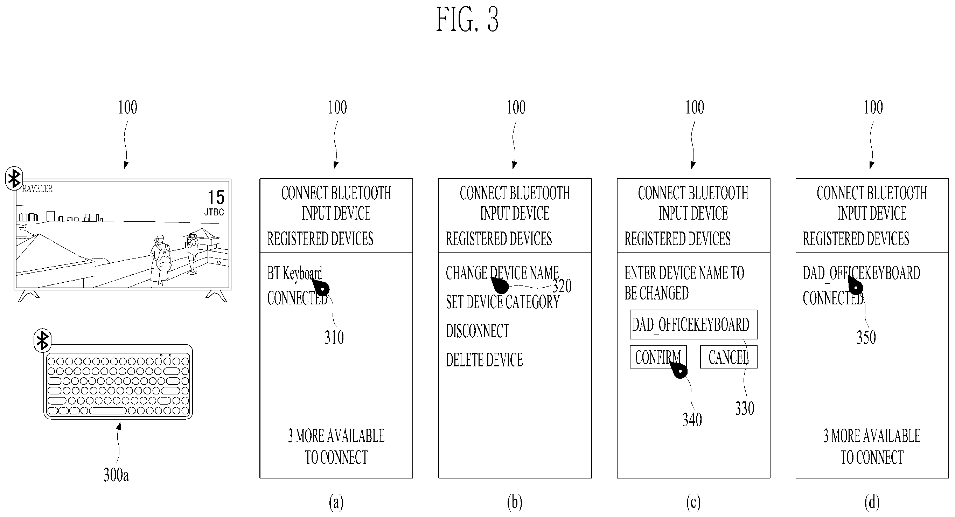

The voice (or audio) signal processed by the controller 180 may be audibly output to the audio output unit 160. In addition, the voice signal processed by the controller 180 may be input to the external output device through the external device interface unit 171. Although not shown in FIG. 2, the controller 180 may include a demultiplexer, an image processor, and the like, and a detailed description thereof will hereinafter be described with reference to FIG. 3.

In addition, the controller 180 may control the overall operation of the TV 100. For example, the controller 180 may control the tuner unit 111 to select a broadcast program corresponding to either a user-selected channel or a prestored channel.

In addition, the controller 180 may control the TV 100 by a user command or an internal program received through the user input interface unit 173. The controller 180 may control the display 150 to display an image. In this case, the image displayed on the display 150 may be a still image or a moving image, and may be a 2D image or a 3D image.

On the other hand, the controller 180 may display a predetermined 2D object in the image displayed on the display 150. For example, the object may be at least one of a connected web screen (newspaper, magazine, etc.), electronic program guide (EPG), various menus, widgets, icons, still images, moving images, and text.

Meanwhile, the controller 180 may modulate and/or demodulate the signal using an amplitude shift keying (ASK) scheme. Here, the ASK scheme may refer to a method for modulating a signal by differentiating the amplitude of a carrier wave according to data values or for restoring an analog signal to a digital data value according to the amplitude of the carrier wave.

For example, the controller 180 may modulate an image signal using the ASK scheme, and may transmit the modulated signal through a wireless communication module.

For example, the controller 180 may demodulate and process the image signal received through the wireless communication module using the ASK scheme.

Accordingly, the TV 100 may simply transmit and receive signals to and from other image display devices arranged adjacent to each other without using either a unique identifier such as a Media Access Control (MAC) address or a complex communication protocol such as TCP/IP.

On the other hand, the TV 100 may further include a photographing unit (not shown). The photographing unit may photograph a user. The photographing unit may be implemented as one camera, but is not limited thereto, and may be implemented by a plurality of cameras. On the other hand, the photographing unit may be embedded in the TV 100 or may be separately arranged on the display 150. The image information photographed by the photographing unit may be input to the controller 180.

The controller 180 may recognize the position of the user based on the image photographed by the photographing unit. For example, the controller 180 may recognize a distance (z-axis coordinates) between the user and the TV 100. In addition, the controller 180 may recognize the X-axis coordinate and the Y-axis coordinate within the display 150 corresponding to the user position.

The controller 180 may sense a user gesture based on an image photographed by the photographing unit, each of signals detected by the sensor unit, or a combination thereof.

The power-supply unit 190 may supply corresponding power to the TV 100. In particular, the controller 180 may be implemented as a System on Chip (SoC), a display 150 for displaying an image, and an audio output unit 160 for audio output.

Specifically, the power-supply unit 190 may include a converter (not shown) for converting AC power into DC power, and a DC/DC converter (not shown) for converting the level of DC power.

On the other hand, the power-supply unit 190 may receive power from the external power source, and may distribute the received power to the respective components. The power-supply unit 190 may be directly connected to the external power source to supply AC power, and may include a battery capable of being charged with electricity.

In the former case, the power-supply unit 190 may be used by connecting to a wired cable, and it is difficult for the power-supply unit 190 to move from one place to another place, and the movement range of the power-supply unit 190 is limited. In the latter case, the power-supply unit 190 can move from one place to another place, but the weight and volume of the power-supply unit 190 may increase as much as the weight and volume of the battery. In addition, for charging, the power-supply unit 190 should be directly connected to a power cable for a predetermined period of time or should be coupled to a charging cradle (not shown) for power supply.

The charging cradle may be connected to the display device through a terminal exposed to the outside. Alternatively, if the power-supply unit 190 approaches the charging cradle using a wireless interface, a built-in battery of the power-supply unit 190 may also be charged with electricity.

The remote controller 200 may transmit a user input to the user input interface unit 173. To this end, the remote controller 200 may use Bluetooth, Radio Frequency (RF) communication, infrared (IR) communication, Ultra-Wideband (UWB), ZigBee, or the like. In addition, the remote controller 200 may receive the image, voice, or data signal output from the user input interface unit 173, and may display or audibly output the received image, voice, or data signal.

On the other hand, the above-described TV 100 may be a fixed or mobile digital broadcast receiver capable of receiving digital broadcast signals.

Meanwhile, the block diagram of the TV 100 shown in FIG. 1 is disclosed for only for illustrative purposes for one embodiment of the present disclosure, and the respective components of the TV 100 shown in FIG. 1 can be integrated, added or omitted according to the specifications of the digital device 100 which is actually implemented.

That is, if necessary, two or more components may be combined into one component, or one component may be subdivided into two or more components. In addition, the functions performed in each block are intended to explain the embodiment of the present disclosure, and the specific operation or device does not limit the scope of the present disclosure.

FIG. 2 is a view illustrating an embodiment in which different users using different input devices use a TV.

(a) in FIG. 2 shows an embodiment in which a first user uses a first application on the TV 100 using a Bluetooth keyboard 300a and a Bluetooth mouse 300b, and (b) in FIG. 2 shows an embodiment in which a second user uses a second application on the TV 100 using a Bluetooth gamepad 400.

That is, the first user in (a) in FIG. 2 and the second user in (b) in FIG. 2 may use the same TV 100, but may primarily use different input devices and different applications.

In this regard, for the first user to use the first application on the existing TV 100 using the Bluetooth keyboard 300a and the Bluetooth mouse 300b, the first user should connect the Bluetooth keyboard 300a and the Bluetooth mouse 300b to the TV 100 and execute the first application.

Similarly, for the second user to use the second application using the Bluetooth gamepad 400, the second user should connect the Bluetooth gamepad 400 to the TV 100 and execute the second application.

The present disclosure is to standardize such steps to maximize user convenience.

FIG. 3 is a view illustrating an embodiment of connecting a Bluetooth input device to a TV according to an embodiment of the present disclosure. Hereinafter, descriptions that are redundant with the above content will be omitted.

Referring to FIG. 3, the TV 100 is in a state in which a Bluetooth connection has been performed with the Bluetooth keyboard 300a, which is the input device. Hereinafter, (a) to (d) in FIG. 3 represent a Bluetooth setting screen output from the TV 100.

More specifically, the TV 100 may output (a) in FIG. 3 at the same time as establishing the Bluetooth connection with the Bluetooth keyboard 300a. In addition, in an embodiment, the TV 100 may output (a) in FIG. 3 via a setting menu.

Referring to (a) in FIG. 3, the TV 100 may output an initial name of the connected Bluetooth keyboard 300a. Here, the initial name may be output based on a unique name and an address of the device. In this regard, the initial name of the connected Bluetooth keyboard 300a may be determined by a manufacturer of the Bluetooth keyboard 300a.

In an embodiment, the TV 100 may receive a first control signal 310 for selecting the initial name of the Bluetooth keyboard 300a. In this regard, the first control signal 310 may be received via a remote control device (not shown). Further, when the Bluetooth mouse (not shown) is connected, the first control signal 310 may be received via the Bluetooth mouse.

Referring to (b) in FIG. 3, the TV 100 may output a list of possible settings related to the Bluetooth keyboard 300a. In an embodiment, the TV 100 may receive a second control signal 320 for selecting a name change of the Bluetooth keyboard 300a. Likewise, the second control signal 320 may be received via the remote control device.

Referring to (c) in FIG. 3, the TV 100 may output an IME window 330 for changing the name of the Bluetooth keyboard 300a. Thereafter, as a third control signal 340 for selecting a confirmation button is received, the TV 100 may output a changed name 350 of the Bluetooth keyboard 300a as in (d) in FIG. 3.

Thereafter, when the Bluetooth keyboard 300a, the same device, is connected to the TV 100, the TV 100 may immediately output the changed name 350.

Accordingly, the user may use the input device personally.

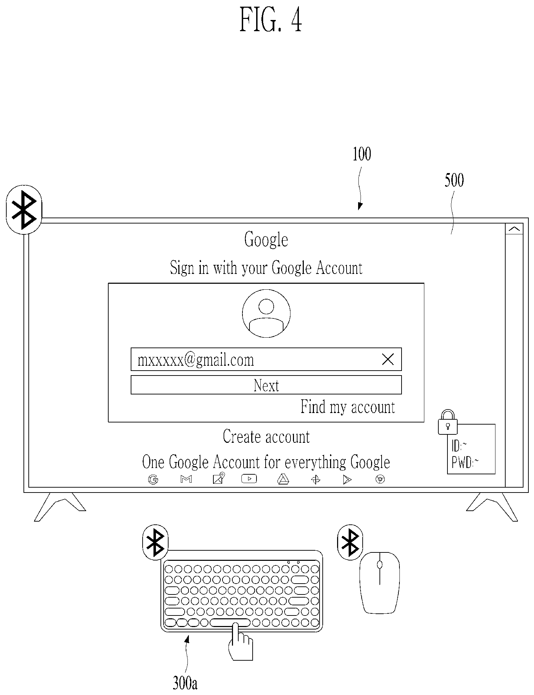

FIG. 4 is a view illustrating an embodiment of authenticating an account based on a Bluetooth input device on a TV according to an embodiment of the present disclosure. Hereinafter, descriptions that are redundant with the above content will be omitted.

Referring to FIG. 4, the TV 100 may additionally map account information to the input device personalized via the embodiment in FIG. 3.

More specifically, the TV 100 may input the account information on a first application 500 using the Bluetooth keyboard 300a. In this regard, the account information may include an ID and a password of the first application 500.

In an embodiment, because the Bluetooth keyboard 300a is personalized, the TV 100 may map the account information input on the first application 500 to the Bluetooth keyboard 300a.

Accordingly, when the user later uses the first application 500 by connecting the Bluetooth keyboard 300a, the account information may be automatically input.

In an embodiment, when the user attempts to authenticate the account of the first application 500 using the personalized input device, the TV 100 may encrypt and store the account information based on a key input on the input device. In this regard, the TV 100 may separately manage the account information stored for each application. In addition, the TV 100 may encrypt and store the account information stored within the TV 100, and decrypt the same to authenticate the account.

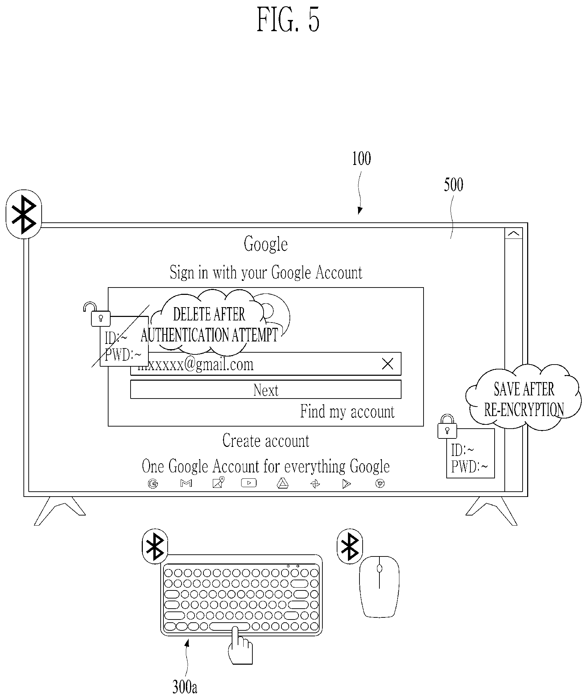

FIG. 5 is a view illustrating an embodiment of deleting a connected account based on a Bluetooth input device on a TV according to an embodiment of the present disclosure. Hereinafter, descriptions that are redundant with the above content will be omitted.

Referring to FIG. 5, the TV 100 may map the Bluetooth keyboard 300a with the account information of the first application 500 according to the embodiment in FIG. 4.

However, because security-related issues may arise when the same account information is continuously used, the TV 100 may delete the account information that has been used once and re-encrypt the same account information. In this regard, a cycle of deleting and re-encrypting the account information follows settings. For example, the TV 100 may delete and re-encrypt the account information once a day, or delete and re-encrypt the account information once a week.

In an embodiment, the TV 100 may periodically delete and re-encrypt not only the account information of the first application 500, but also account information of another application mapped to another input device.

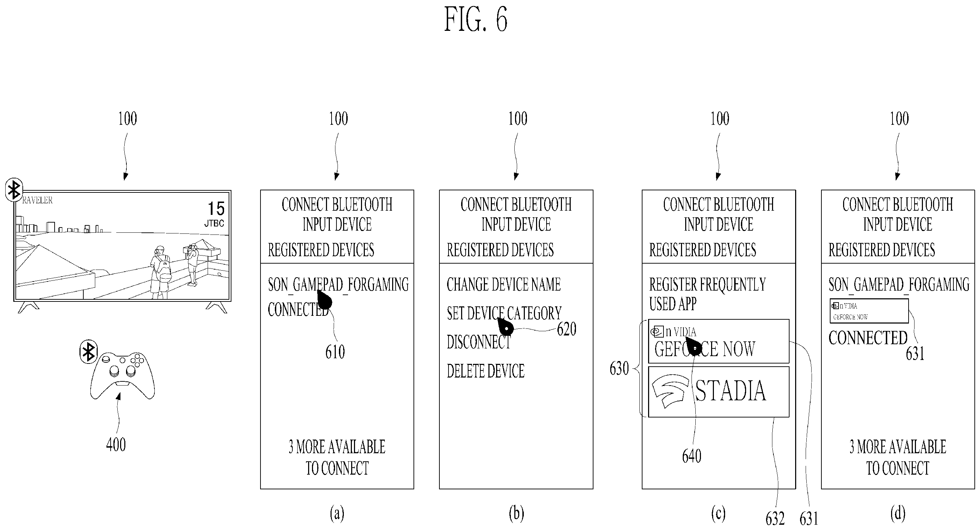

FIG. 6 is a view illustrating an embodiment of setting a category of a Bluetooth input device on a TV according to an embodiment of the present disclosure. Hereinafter, descriptions that are redundant with the above content will be omitted.

Referring to FIG. 6, the TV 100 establishes the Bluetooth connection with the gamepad 400, and is in a state in which a name change of the gamepad 400 has been completed, as in the embodiment in FIG. 3.

That is, referring to (a) in FIG. 6, the TV 100 may output the changed name of the gamepad 400 connected via the Bluetooth.

Referring to (b) in FIG. 6, as a first control signal 610 for selecting the changed name is received, a list of possible settings related to the gamepad 400 may be output. In an embodiment, the TV 100 may receive a second control signal 620 for setting a category of the gamepad 400.

Referring to (c) in FIG. 6, the TV 100 may output a frequently used application list 630 while the input device is connected, to set the category of the input device. Here, the frequently used application list 630 may include a first application icon 631 and a second application icon 632.

In this regard, the TV 100 may align the first application icon 631 and the second application icon 632 in an order of frequent use by the user while the gamepad 400 is connected.

In an embodiment, the TV 100 may receive a third control signal 640 for selecting the first application icon 631 included in the frequently used application list 630.

Referring to (d) in FIG. 6, the TV 100 may map the first application to the gamepad 400.

More specifically, the TV 100 may set the gamepad 400 for use with the first application based on the third control signal 640 for selecting the first application icon 631 from the frequently used application list while connected to the gamepad 400.

Accordingly, the TV 100 may output the first application icon 631 together under the changed name of the gamepad 400.

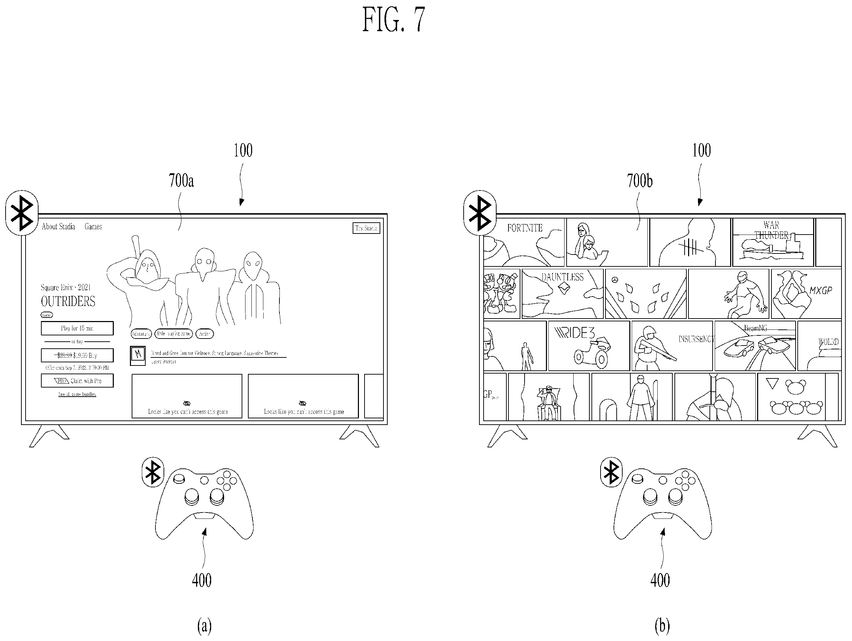

Thereafter, the TV 100 may immediately execute the first application when the gamepad 400 is connected. This will be described in detail in FIG. 7.

FIG. 7 is a view illustrating an embodiment of outputting a list of applications linked to a Bluetooth input device on a TV according to an embodiment of the present disclosure. Hereinafter, descriptions that are redundant with the above content will be omitted.

In an embodiment, when the category of the input device 400 is set according to the embodiment of FIG. 6, the TV 100 may immediately execute an application 700a or output a frequently used application list 700b when the input device 400 is connected.

More specifically, referring to (a) in FIG. 7, when the input device 400 is connected, the TV 100 may immediately execute the application 700a set via the embodiment of FIG. 6. Referring to the above-described example, when the gamepad 400 is connected, the TV 100 may immediately execute the first application 700a.

In another embodiment, referring to (b) in FIG. 7, when the input device 400 is connected, the TV 100 may output the list 700b of the applications frequently used by the input device 400. Thereafter, the TV 100 may execute an application corresponding to a selected icon based on a control signal (not shown) for selecting the icon corresponding to the application included in the frequently used application list 700b.

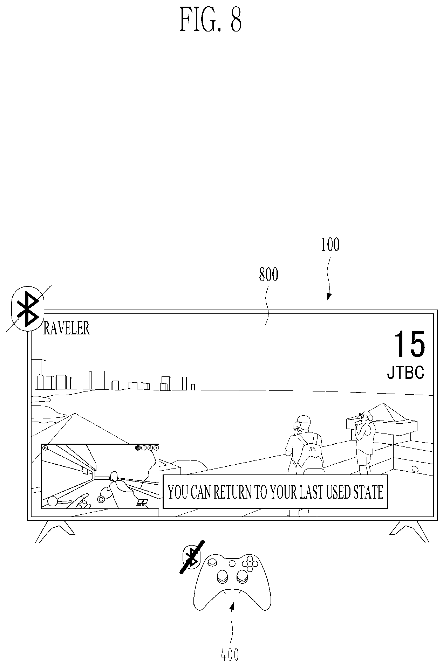

FIG. 8 is a view illustrating an embodiment of storing a state of an application linked to a Bluetooth input device on a TV according to an embodiment of the present disclosure. Hereinafter, descriptions that are redundant with the above content will be omitted.

Referring to FIG. 8, when the Bluetooth communication with the connected input device 400 is disconnected, the TV 100 may store a state of an application 800 being executed using the input device 400.

More specifically, the application 800 may be executed while the TV 100 and the input device 400 are being in the Bluetooth connection. In this regard, the TV 100 and the input device 400 may be disconnected from each other because of various situations. In this regard, the TV 100 may store the state of the application 800 that is currently running based on the input device 400. Thereafter, when the input device 400 is reconnected, the TV 100 may execute the application 800 from the last saved state thereof. To this end, the TV 100 may keep the running state of the application 800 in background.

In an embodiment, when the input device 800 is disconnected, the TV 100 may output a pop-up window on a display module indicating that the last saved state of the running application 800 may be returned.

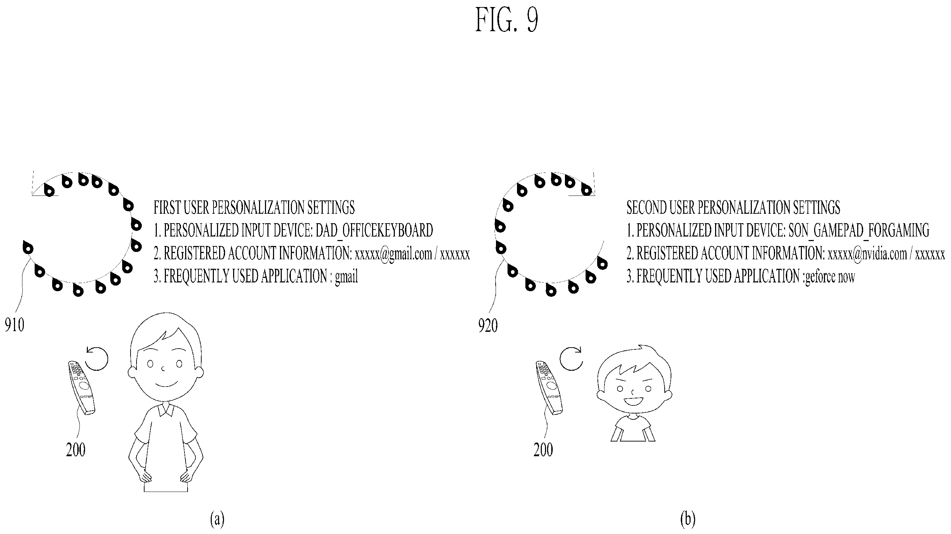

FIG. 9 is a view illustrating an embodiment of setting personalized information of a remote control device on a TV according to an embodiment of the present disclosure. Hereinafter, descriptions that are redundant with the above content will be omitted.

Devices such as the Bluetooth keyboard, the Bluetooth mouse, and the gamepad use the wireless Bluetooth communication, and thus, are greatly affected by surroundings. In particular, when the devices are not able to be used because of a problem in a communication state, a backup is necessary.

The TV (not shown) may receive a control signal from the remote control device 200. In this regard, because the remote control device 200 is not connected to the TV 100 via Bluetooth, the remote control device 200 may be used even when the TV 100 is disconnected from another input device connected via Bluetooth.

Accordingly, in an embodiment, the TV 100 may map personalized information to a gesture signal received from the remote control device 200.

Referring to (a) in FIG. 9, a first user may input a first gesture signal 910 to the TV using the remote control device 200. Here, the first gesture signal 910 may correspond to a signal in which the user moves the remote control device 200 counterclockwise.

When receiving the first gesture signal 910 for the first time, the TV may set the first gesture signal 910 and personalized information of the first user. Here, the personalized information may include a Bluetooth input device used for personalization, registered account information, and frequently used application information.

Referring to an example of (a) in FIG. 9, the TV may map the account information registered via the embodiment of FIG. 4 and the frequently used application information set via the embodiment of FIG. 6 to the input device named "dad_officekeyboard" in the first gesture signal 910.

Accordingly, when receiving the first gesture signal 910 from the remote control device 200 later, the TV may immediately input the personalized information mapped to the first gesture signal 910.

Referring to (b) in FIG. 9, a second user may input a second gesture signal 920 to the TV using the remote control device 200. Here, the second gesture signal 920 may correspond to a signal in which the user moves the remote control device 200 clockwise.

When receiving the second gesture signal 910 for the first time, the TV may set the second gesture signal 920 and personalized information of the first user. Here, the personalized information may include a Bluetooth input device used for personalization, registered account information, and frequently used application information.

Referring to an example of (b) in FIG. 9, the TV may map the account information registered via the embodiment of FIG. 4 and the frequently used application information set via the embodiment of FIG. 6 to the input device named "son_gamepad_forgaming" in the second gesture signal 920.

Accordingly, when receiving the second gesture signal 920 from the remote control device 200 later, the TV may immediately input the personalized information mapped to the second gesture signal 910.

In an embodiment, (a) and (b) in FIG. 9 describe the gesture signal using the remote control device 200 as the personalization setting scheme, but the personalization settings are able to be achieved in a scheme of inputting a password instead of the gesture signal.

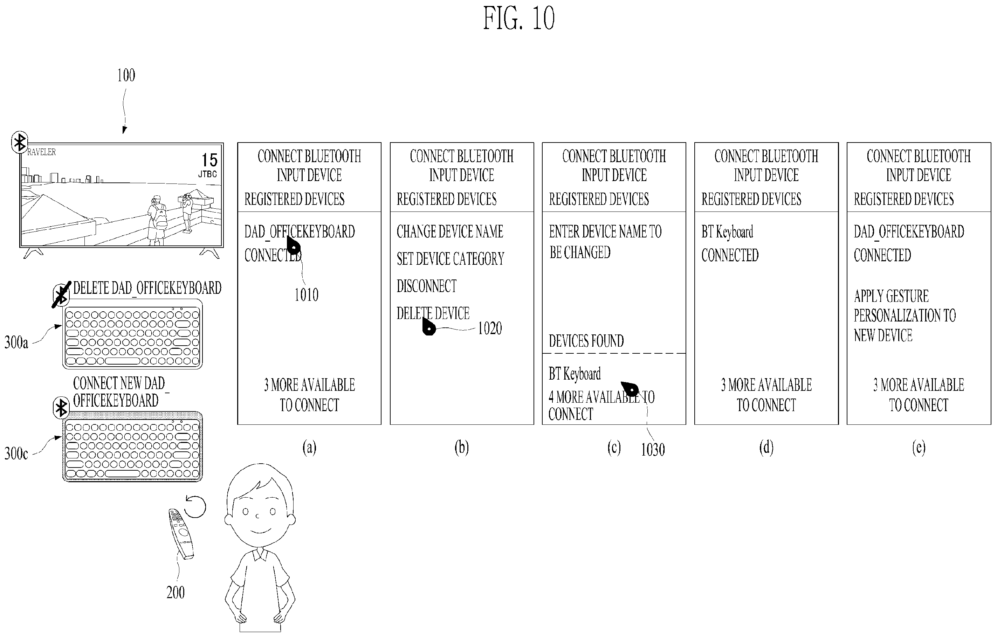

An embodiment utilizing the embodiment of FIG. 9 will be described in detail below with FIG. 10.

FIG. 10 is a view illustrating an embodiment of connecting a Bluetooth input device using personalized information on a TV according to an embodiment of the present disclosure. Hereinafter, descriptions that are redundant with the above content will be omitted.

Referring to FIG. 10, the TV 100 is in the state of being connected to the first Bluetooth keyboard 300a, and (a) to (e) in FIG. 10 correspond to screens being output from the TV 100.

Referring to (a) in FIG. 10, the TV 100 may output a screen indicating a connection state of the first Bluetooth keyboard 300a for which personalization settings have been completed according to the above-described embodiment. In an embodiment, the TV 100 may receive a first control signal 1010 for selecting a changed name of the first Bluetooth keyboard 300a.

Referring to (b) in FIG. 10, the TV 100 may output a list of possible settings related to the first Bluetooth keyboard 300a as the first control signal 1010 is received. In an embodiment, the TV 100 may receive a second control signal 1020 for deleting the connection of the first Bluetooth keyboard 300a.

Referring to (c) in FIG. 10, the TV 100 may delete the first Bluetooth keyboard 300a and output a list of other connectable Bluetooth input devices.

In an embodiment, the TV 100 may receive a third control signal 1030 for selecting a second Bluetooth keyboard 300c included in the list of the connectable Bluetooth input devices.

Accordingly, referring to (d) in FIG. 10, the TV 100 may connect the second Bluetooth keyboard 300c. However, (d) in FIG. 10 corresponds to a state in which personalization settings of the second Bluetooth keyboard 300c are not completed.

In an embodiment, the TV 100 may receive the first gesture signal from the remote control device 200. In this regard, the first gesture signal may include the personalized information of the first user as described above in FIG. 9.

Referring to (e) in FIG. 10, the TV 100 may apply the personalized information of the first user to the second Bluetooth keyboard 300c.

More specifically, the first gesture signal may be mapped with the personalized information of the input device named "dad_officekeyboard" and stored in the TV 100.

Accordingly, the TV 100 may automatically change a name of the second Bluetooth keyboard 300c to "dad_officekeyboard" as the first gesture signal is received.

In addition, in addition to the embodiment of changing the name, the embodiment of setting the category and the embodiment of mapping the frequently used application list may also be applied in the same way.

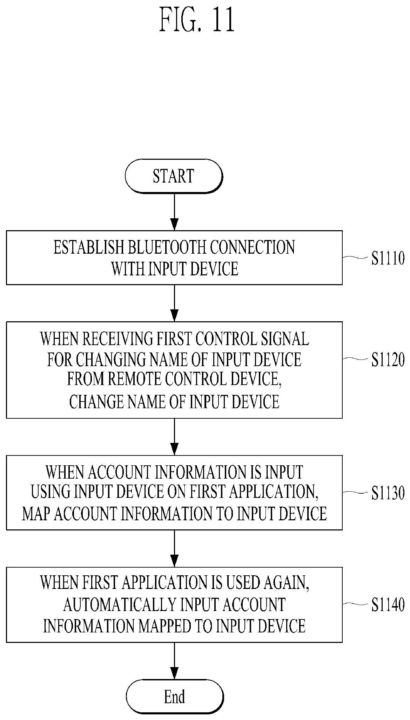

FIG. 11 is a flowchart illustrating a method for controlling a TV according to an embodiment of the present disclosure. Hereinafter, descriptions that are redundant with the above content will be omitted.

Referring to FIG. 11, in step (S1110), the TV may establish the Bluetooth connection with the first input device.

In step (S1120), when receiving the first control signal for changing the name of the first input device from the remote control device, the TV may change the name of the first input device.

In step (S1130), when the account information is input using the first input device on the first application, the TV may map the account information to the first input device. In this regard, the TV may encrypt and store the account information, and when the account information is input, may decrypt the encrypted account information. In addition, in an embodiment, the TV may discard the encrypted account information and newly encrypt the account information based on a first cycle.

In an embodiment, when receiving the second control signal for setting the category of the first input device, the TV may output the frequently used application list. In this regard, the frequently used application list may include icons corresponding to applications used at least a first number of times while the first input device is connected.

In an embodiment, when receiving the third control signal for selecting an icon corresponding to the second application included in the frequently used application list, the TV may map the second application to the first input device. Thereafter, the TV may directly execute the second application when the first input device is connected. In another embodiment, the TV may output the application list when the first input device is connected.

In step (S1140), when the first application is used again, the TV may automatically input the account information mapped to the first input device.

In addition, the embodiment described above in FIGS. 3 to 10 may also be implemented using the method as in FIG. 11.

The present disclosure may be implemented as code that can be written to a computer-readable recording medium and can thus be read by a computer. The computer-readable recording medium may be any type of recording device in which data can be stored in a computer-readable manner.

Examples of the computer-readable recording medium include a hard disk drive (HDD), a solid state drive (SSD), a silicon disk drive (SDD), a ROM, a RAM, a CD-ROM, a magnetic tape, a floppy disk, optical data storage, and a carrier wave (e.g., data transmission over the Internet). In addition, the computer may include the controller. The above exemplary embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

### [Industrial Applicability]

The present disclosure relates to a TV and a method for controlling a TV, which may be implemented repeatedly and thus have industrial applicability.

## Claims

1. A TV comprising:
a display module configured to output content;
a communicator configured to receive a control signal of a remote control device; and
a controller,
wherein the controller is configured to:
establish a Bluetooth connection with an input device; and
change a name of the input device when receiving a first control signal for changing the name of the input device from the remote control device.

2. The TV of claim 1, wherein the controller is configured to:
map account information to the input device when the account information is input using the input device on a first application; and
input the account information mapped to the input device automatically when the first application is used again.

3. The TV of claim 2, wherein the controller is configured to:
encrypt and store the account information; and
decrypt the encrypted account information when the account information is input.

4. The TV of claim 3, wherein the controller is configured to discard the encrypted account information and newly encrypt the account information based on a first cycle.

5. The TV of claim 1, wherein the controller is configured to output a frequently used application list when receiving a second control signal for setting a category of the input device, wherein the frequently used application list includes icons respectively corresponding to applications used at least a first number of times while the input device is connected.

6. The TV of claim 5, wherein the controller is configured to map a second application to the input device when receiving a third control signal for selecting an icon corresponding to the second application included in the frequently used application list.

7. The TV of claim 6, wherein the controller is configured to immediately execute the second application when the input device is connected.

8. The TV of claim 5, wherein the controller is configured to output the application list when the input device is connected.

9. The TV of claim 1, wherein the controller is configured to:
save an execution state of a third application when the input device is disconnected while executing the third application via the input device; and
re-execute the third application based on the saved execution state of the third application when the input device is reconnected.

10. The TV of claim 9, wherein the controller is configured to output a pop-up window indicating that the third application is re-executable when the input device is disconnected.

11. The TV of claim 1, wherein the controller is configured to:
receive a first gesture signal from the remote control device; and
map personalized information to the first gesture signal, wherein the personalized information includes at least one of a changed name of the input device, account information mapped to the input device, and a frequently used application list of the input device.

12. The TV of claim 12, wherein the controller is configured to use the personalized information mapped to the first gesture signal when receiving the first gesture signal from the remote control device while the Bluetooth connection with the input device is lost.

13. A method for controlling a TV configured to receive a control signal from a remote control device, the method comprising:
establishing a Bluetooth connection with an input device;
changing a name of the input device when receiving a first control signal for changing the name of the input device from the remote control device;
mapping account information to the input device when the account information is input using the input device on a first application; and
inputting the account information mapped to the input device automatically when the first application is used again.
